# EUROPÄISCHE PATENTSCHRIFT

(11) **EP 0 606 833 B1**
(45) Veröffentlichungstag und Bekanntmachung des Hinweises auf die Patenterteilung: **17.12.1997**
(21) Anmeldenummer: 94100005.1
(22) Anmeldetag: 03.01.1994
(51) Int. Cl.: C07F 9/38, C07F 9/30, D06M 13/447, C09K 3/18

(54) **Acrylat- und/oder methacrylatgruppenhaltige fluorierte Carbonsäureester von Phosphono- und Phosphinocarbonsäuren, ein Verfahren zu ihrer Herstellung sowie derenVerwendung**
Fluorinated carboxylic acid esters of phosphono and phosphino carboxylic acids containing an acrylate and/or methacrylate group, process for their preparation and their use
Esters carboxyliques fluorés d'acides phosphono et phosphino carboxyliques, contenant un groupe acrylate et/ou méthacrylate, leur procédé de préparation ainsi que leur utilisation

(30) Priorität: 14.01.1993 DE 4300799
(43) Veröffentlichungstag der Anmeldung: 20.07.1994
(73) Patentinhaber: BAYER AG, 51368 Leverkusen (DE)
(72) Erfinder: Pohmer, Klaus, Dr., D-51061 Köln (DE); Weber, Rainer, Dr., D-51519 Odenthal (DE); Block, Hans-Dieter, Dr., D-51381 Leverkusen (DE); Moretto, Hans-Heinrich, Dr., D-51375 Leverkusen (DE)

(56) Entgegenhaltungen:
- EP-A- 0 238 825
- DE-A- 2 424 243
- DE-A- 2 439 281

## Beschreibung

Die vorliegende Erfindung betrifft acrylat- und/oder methacrylatgruppenhaltige fluorierte Carbonsäureester von Phosphonocarbonsäuren, deren Verwendung als Hydrophobier-und/oder Oleophobiermittel sowie ein Verfahren zu ihrer Herstellung.

Perfluoralkylgruppenhaltige Verbindungen finden aufgrund ihrer hydro-und oleophobierenden Eigenschaften vielfältige Anwendung in Imprägniermitteln in der Technik (vergl. Ullmann, Enzyklopädie der technischen Chemie, 4. Auflage 1976, Band 11, S.644 und ibd., 5. Auflage 1988, Band A11, S. 373/374). Typische Anwendungen sind der Einsatz als Imprägniermittel zur Hydro- und Oleophobierung von Textilien (vergl. Ullmann, Enzyklopädie der technischen Chemie, 4. Auflage 1983, Band 23, S.87), Leder (vergl. Ullmann, Enzyklopädie der technischen Chemie, 4. Auflage 1978, Band 16, S. 168) und Papier (vergl. J. N. Meußdoerffer und H. Niederprüm, Chemikerzeitung 104 (1980) 45-52).

Beispiele für solche Phobiermittel sind perfluorgruppenhaltige Alkohole und Acrylate oder deren Polymerdispersionen (vergl. J. N. Meußdoerffer und H. Niederprüm, Chemikerzeitung 104 (1980) 45-52 und Ullmann, Enzyklopädie der technischen Chemie, 4. Auflage 1983, Band 23, S. 87). Wege zu deren Synthese sind in J.N.Meußdoerffer und H. Niederprüm, Chemikerzeitung 104 (1980) 45-52 beschrieben.

Die perfluorierten Ausgangsverbindungen der oben genannten Fluortenside sind technisch auf drei unterschiedlichen Synthesewegen zugänglich:
a) elektrochemische Fluorierung,
b) Telomerisation von Perfluorolefinen, insbesondere Tetrafluorethylen,
c) Oligomerisierung von Tetrafluorethylen.

Da die obengenannten Methoden zur Herstellung der perfluorierten Ausgangsverbindungen technisch sehr aufwendig sind, resultieren hohe Kosten bei der Herstellung der gewünschten perfluorgruppenhaltigen chemischen Verbindungen.

Aufgabe war es, fluorgruppenhaltige, organomodifizierte Verbindungen zur Verfügung zu stellen, die hydrophobierende und/oder oleophobierenden Eigenschaften aufweisen und deren Herstellung einfach und kostengünstig möglich ist.

Diese Aufgabe konnte durch die erfindungsgemäßen acrylat- und/oder methacrylatgruppenhaltigen fluorierten Carbonsäureester von Phosphono- oder Phosphinocarbonsäuren gelöst werden.

Gegenstand der Erfindung sind acrylat- und/oder methacrylatgruppenhaltige fluorierte Carbonsäureester von Phosphono- oder Phosphinocarbonsäuren der allgemeinen Formel (I), 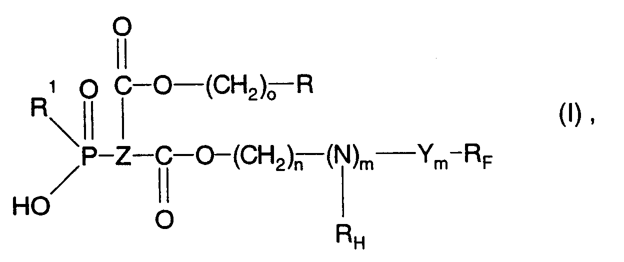 worin
- R¹: eine Hydroxylgruppe, eine Methylgruppe, eine Ethylgruppe oder ein Phenylrest ist,
- R_{F}: ein linearer oder verzweigter Fluoralkylrest mit 1 bis 18 Kohlenstoffatomen ist oder ein fluorierter, verzweigter oder linearer Mono- oder Polyether mit 1 bis 18 Kohlenstoffatomen ist,
- R_{H}: ein linearer oder verzweigter Alkylrest mit 1 bis 10 Kohlenstoffatomen ist,
- R: eine Acrylatgruppe der Struktur 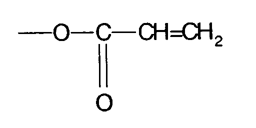 oder eine Methacrylatgruppe der Struktur 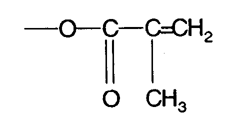
- Y: eine 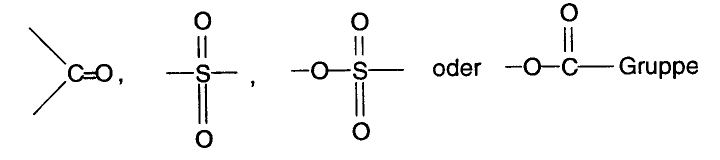 darstellt,
- Z: für einen linearen oder verzweigten Alkantriylrest (dreiwertiger Kohlenwasserstoffrest) mit 1 bis 20 Kohlenstoffatomen oder
für einen durch Aminogruppen, die ihrerseits durch C₁- bis C₁₀-Alkylgruppen oder Arylgruppen substituiert sein können, unterbrochenen, linearen oder verzweigten Alkantriylrest mit 1 bis 20 Kohlenstoffatomen oder
für einen durch eine oder mehrere Gruppen der Struktur -COR² substituierten, linearen oder verzweigten Alkantriylrest mit 1 bis 20 Kohlenstoffatomen oder
für einen durch eine oder mehrere Gruppen der Struktur -PO₂HR¹ substituierten, linearen oder verzweigten Alkantriylrest mit 1 bis 20 Kohlenstoffatomen steht, wobei R¹ dieselbe Bedeutung wie oben hat,
- m: eine 0 oder 1 sein kann,
- n: eine ganze Zahl von 0 bis 6 darstellt,
- o: eine ganze Zahl von 0 bis 6 darstellt und
- R²: für einen Hydroxylrest oder einen Rest der Struktur 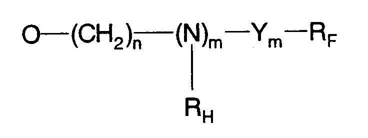 oder einen Rest der Struktur O-(CH₂)ₒ-R oder
für einen linearen oder verzweigten Alkoxyrest mit 1 bis 30 Kohlenstoffatomen steht, wobei n, m, o, R_{H}, R_{F}, R und Y die gleiche Bedeutung wie oben haben,
und deren Salze.

Acrylat- und/oder methacrylgruppenhaltige fluorierte Carbonsäureester von Phosphono-oder Phosphinocarbonsäuren sind vorzugsweise solche, bei denen R_{F} ein linearer oder verzweigter Fluoralkylrest mit 3 bis 10 Kohlenstoffatomen ist.

Bevorzugt sind acrylat- und/oder methacrylatgruppenhaltige fluorierte Carbonsäureester von Phosphono- oder Phosphinocarbonsäuren, bei denen R_{H} für einen Alkylrest mit einem oder zwei Kohlenstoffatomen steht.

Besonders bevorzugt sind acrylat- und/oder methacrylatgruppenhaltige fluorierte Carbonsäureester von Phosphono- oder Phosphinocarbonsäuren, bei denen n eins oder zwei ist.

Acrylat- und/oder methacrylatgruppenhaltige fluorierte Carbonsäureester von Phosphono-oder Phosphinocarbonsäuren, bei denen o eins oder zwei ist, sind besonders bevorzugt.

Acrylat- und/oder methacrylatgruppenhaltige fluorierte Carbonsäureester von Phosphono- oder Phosphinocarbonsäuren, in denen m gleich eins ist, sind besonders bevorzugt.

Besonders bevorzugte acrylat- und/oder methacrylatgruppenhaltige fluorierte Carbonsäureester von Phosphono- oder Phosphinocarbonsäuren weisen beispielsweise folgende Struktur auf:

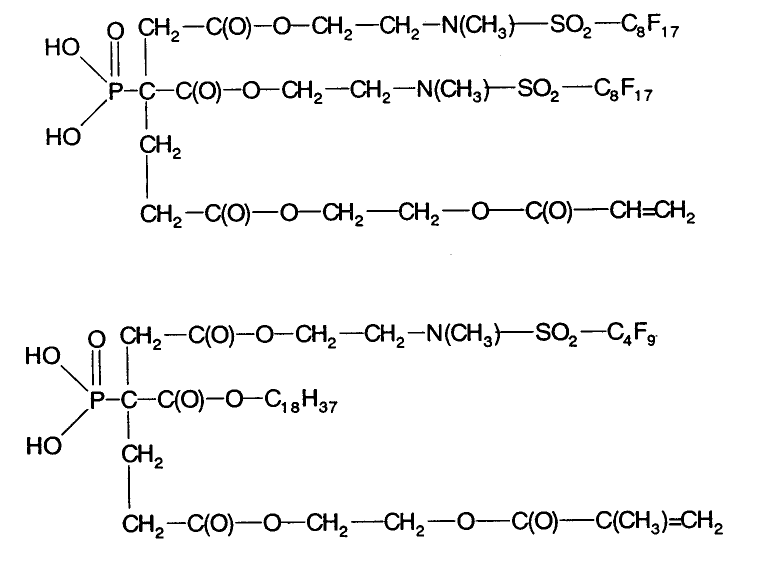

Besonders bevorzugt sind die im folgenden aufgelisteten Reste:

Beispiele für R_{F}:
CF₃-(CF₂)₂-
CF₃-(CF₂)₃-
CF₃-(CF₂)₅-
CF₃-(CF₂)₆-
CF₃-(CF₂)₇-
CF₃-(CF₂)₁₁-
C₆F₅-
CF₃-C₆F₄-
H-(CF₂)₆-
H-(CF₂)₂-O-
CF₃-CHF-CF₂-O-
CF₃-CF₂-CF₂-O-CF(CF₃)-
CF₃-CF₂-[CF₂-O-CF(CF₃)]₂-
CF₃-CF₂-[CF₂-O-CF(CF₃)]₃-

### Beispiele für Z:

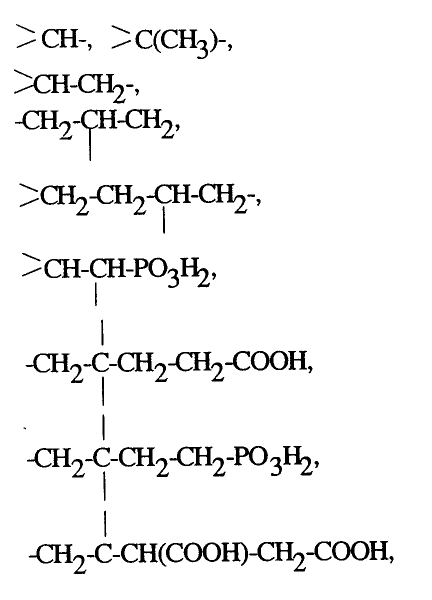

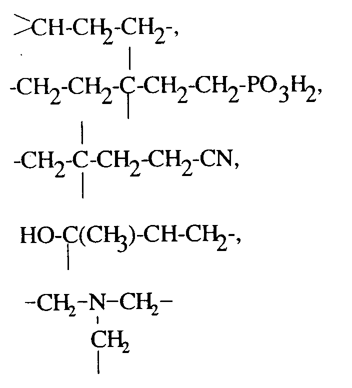

Die erfindungsgemäßen acrylat- und/oder methacrylatgruppenhaltigen fluorierten Carbonsäureester von Phosphono- oder Phosphinocarbonsäuren lassen sich z.B. durch mehrstufige Synthese in Veresterungsreaktionen der entsprechenden Phosphono-oder Phosphinocarbonsäuren oder deren Salzen mit fluorgruppenhaltigen Alkoholen und hydroxyfunktionellen Acryl- bzw. Methacrylsäurederivaten darstellen: 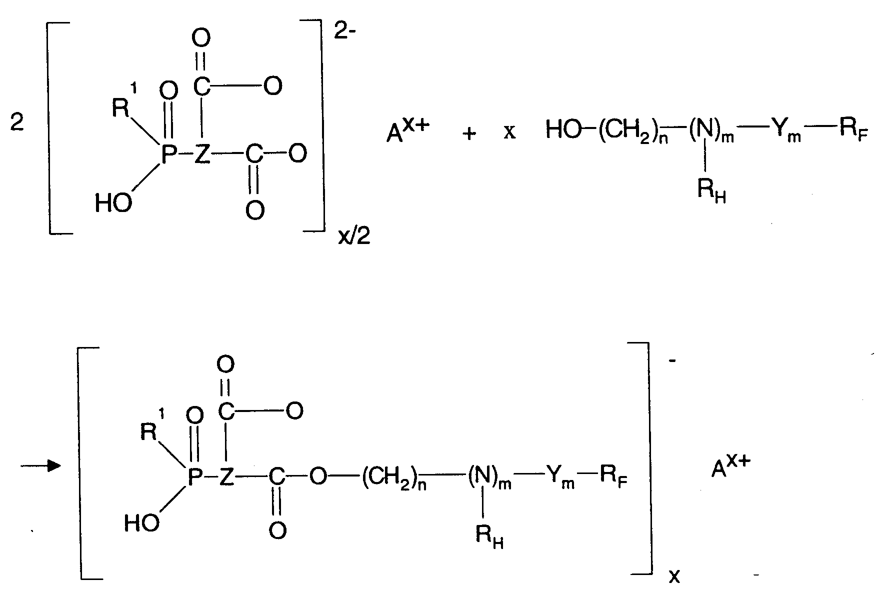 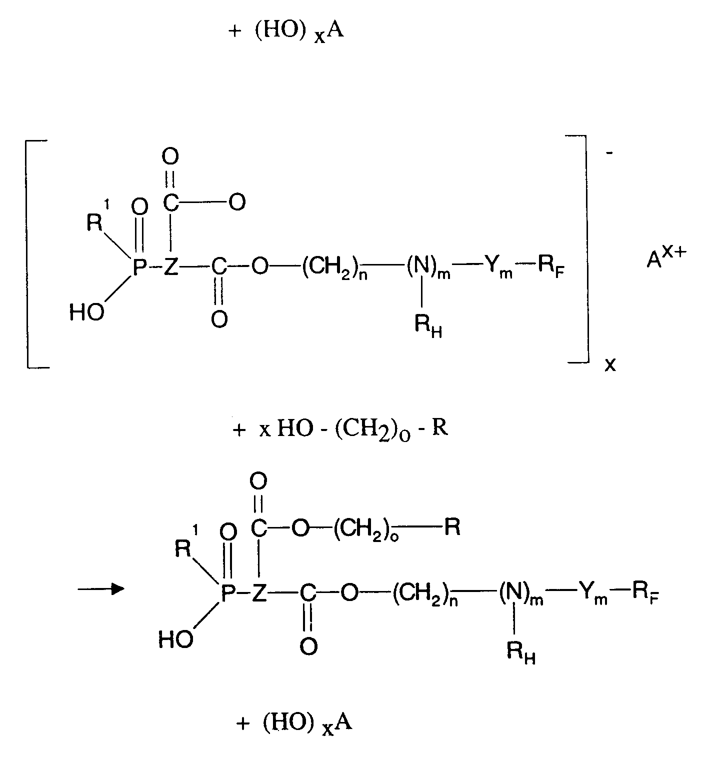 wobei
- R¹, R, R_{F}, R_{H}, Y, Z, m, n und o: dieselbe Bedeutung wie oben haben,
- A: ein Wasserstoffkation, ein Ammoniumkation oder ein ein- oder mehrwertiges Metallkation ist.
- x: eine ganze Zahl ist, die der Ladung des Kations A entspricht.

Ein weiterer Gegenstand der Erfindung ist die Verwendung der erfindungsgemäßen acrylat- und/oder methacrylatgruppenhaltigen fluorierten Carbonsäureester von Phosphono- oder Phosphinocarbonsäuren als Hydrophobier- und/oder Oleophobiermittel.

Aufgrund der hydrophobierenden und oleophobierenden Eigenschaften der erfindungsgemäßen Verbindungen können sie als Imprägniermittel in verschiedenen Anwendungsgebieten eingesetzt werden, wobei die Applikation beispielsweise in Form der erfindungsgemäßen Verbindungen an sich oder in Form von Polymerdispersionen erfolgen kann:

Auf Natur- und Kunstfasern (z.B. für Textilien, Teppiche oder Markisen) können die erfindungsgemäßen Verbindungen beispielsweise zur Abweisung von Wasser, Fetten, Ölen und/oder Schmutz eingesetzt werden.

Auf Papieren und Kartonagen (z.B. für Verpackungen oder Vliesstoffe) können die erfindungsgemäßen Verbindungen ebenfalls zur Abweisung von Wasser, Fetten, Ölen und/oder Schmutz eingesetzt werden.

Auch auf Leder (z.B. für Polster, Schuhe oder Bekleidung) finden die erfindungsgemäßen Verbindungen zur Abweisung von Wasser, Fetten, Ölen und/oder Schmutz Verwendung.

Ebenso können die erfindungsgemäßen Verbindungen auf Keramiken (z.B. Fliesen), auf Natur- oder Kunststeinen (z.B. Sandsteine), auf Holz (z.B. Holzverkleidung an Fassaden) und auf Kunststoffen (z.B. Polyester) zur Imprägnierung gegen Wasser, Fette, Öle, Schmutz, Algenbewuchs und/oder Verwitterung verwendet werden.

Die Erfindung soll anhand der nachfolgenden Beispiele näher erläutert werden.

### Beispiele

### Beispiel 1

In einer Dreihalskolben-Rührapparatur mit Wasserabscheider werden 0,4 mol (223 g) N-(2-Hydroxyethyl)-N-methyl-perfluoroctylsulfonamid in 150 ml 4-Methyl-pentan-2-on gelöst und mit 0,5 ml konzentrierter Schwefelsäure versetzt. Diese Lösung wird auf ca. 116°C erhitzt. Anschließend versetzt man langsam mit 0,2 mol (54 g) in 54 g Wasser gelöster 2-Phosphonobutan-1,2,4-tricarbonsäure. Nach erfolgter Zugabe wird solange am Rückfluß gerührt, bis die komplette Menge Wasser (61,2 ml) aus dem Reaktionsgemisch abdestilliert ist.

Anschließend versetzt man langsam mit 0,2 mol (23,2 g) Hydroxyethylacrylat und rührt solange am Rückfluß, bis die komplette Menge Wasser (3,6 ml) aus dem Reaktionsgemisch abdestilliert ist.

Nach erfolgter Reaktion wird das Lösungsmittel bei 70°C und 70 mbar abdestilliert und das erhaltene Produkt vollständig getrocknet. Die Ausbeute der mit zwei Äquivalenten N-(2-Hydroxyethyl)-N-methyl-perfluoroctylsulfonamid und einem Äquivalent Hydroxyethylacrylat dreifach veresterten 2-Phosphonobutan-1,2,4-tricarbonsäure beträgt 277 g (entsprechend 95,8 % der Theorie).

### Beispiel 2

In einer Dreihalskolben-Rührapparatur mit Wasserabscheider werden 0,2 mol (71 g) N-(2-Hydroxyethyl)-N-methyl-perfluorbutylsulfonamid in 150 ml 4-Methyl-pentan-2-on gelöst und mit 0,5 ml konzentrierter Schwefelsäure versetzt. Diese Lösung wird auf ca. 116°C erhitzt. Anschließend versetzt man langsam mit 0,2 mol (54 g) in 54 g Wasser gelöster 2-Phosphonobutan-1,2,4-tricarbonsäure. Nach erfolgter Zugabe wird solange am Rückfluß gerührt, bis die komplette Menge Wasser (57,6 ml) aus dem Reaktionsgemisch abdestilliert ist.

Anschließend versetzt man langsam mit 0,2 mol (54 g) in 50 ml 4-Methylpentan-2-on gelöstem Octadecanol und rührt solange am Rückfluß, bis die komplette Menge Wasser (3,6 ml) aus dem Reaktionsgemisch abdestilliert ist.

Abschließend versetzt man langsam mit 0,2 mol (26 g) Hydroxyethylmethacrylat und rührt solange am Rückfluß, bis die komplette Menge Wasser (3,6 ml) aus dem Reaktionsgemisch abdestilliert ist.

Nach erfolgter Reaktion wird das Lösungsmittel bei 70°C und 70 mbar abdestilliert und das erhaltene Produkt vollständig getrocknet. Die Ausbeute der mit je einem Äquivalent N-(2-Hydroxyethyl)-N-methyl-perfluorbutylsulfonamid, Octadecanol und Hydroxyethyl-methacrylat dreifach veresterten 2-Phosphonobutan-1,2,4-tricarbonsäure beträgt 180 g (entsprechend 92,5 % der Theorie).

## Patentansprüche

1. Acrylat- und/oder methacrylatgruppenhaltige fluorierte Carbonsäureester von Phosphono- oder Phosphinocarbonsäuren der allgemeinen Formel (I) 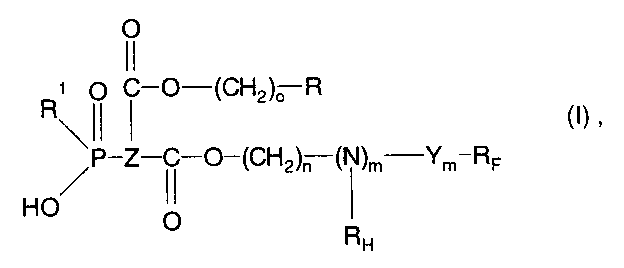 worin
R¹ eine Hydroxylgruppe, eine Methylgruppe, eine Ethylgruppe oder ein Phenylrest ist,
R_{F} ein linearer oder verzweigter Fluoralkylrest mit 1 bis 18 Kohlenstoffatomen ist oder ein fluorierter, verzweigter oder linearer Mono- oder Polyether mit 1 bis 18 Kohlenstoffatomen ist,
R_{H} ein linearer oder verzweigter Alkylrest mit 1 bis 10 Kohlenstoffatomen ist,
R eine Acrylatgruppe der Struktur 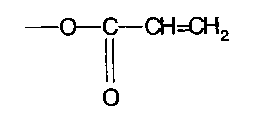 oder eine Methacrylatgruppe der Struktur 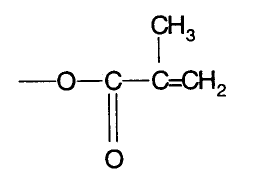
Y eine 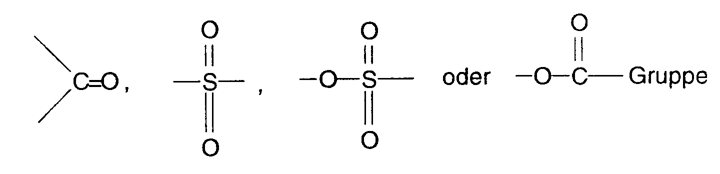 darstellt,
Z für einen linearen oder verzweigten Alkantriylrest mit 1 bis 20 Kohlenstoffatomen oder
für einen durch Aminogruppen, die ihrerseits durch C₁- bis C₁₀-Alkylgruppen oder Arylgruppen substituiert sein können, unterbrochenen, linearen oder verzweigten Alkantriylrest mit 1 bis 20 Kohlenstoffatomen oder
für einen durch eine oder mehrere Gruppen der Struktur -COR² substituierten, linearen oder verzweigten Alkantriylrest mit 1 bis 20 Kohlenstoffatomen oder
für einen durch eine oder mehrere Gruppen der Struktur -PO₂HR¹ substituierten, linearen oder verzweigten Alkantriylrest mit 1 bis 20 Kohlenstoffatomen steht, wobei R¹ dieselbe Bedeutung wie oben hat,
m eine 0 oder 1 sein kann,
n eine ganze Zahl von 0 bis 6 darstellt,
o eine ganze Zahl von 0 bis 6 darstellt und
R² für einen Hydroxylrest oder einen Rest der Struktur 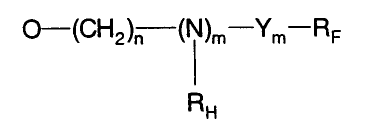 oder einen Rest der Struktur O-(CH₂)ₒ-R oder
für einen linearen oder verzweigten Alkoxyrest mit 1 bis 30 Kohlenstoffatomen steht, wobei n, m, o, R_{H}, R_{F}, R und Y die gleiche Bedeutung wie oben haben,
und deren Salze.

2. Acrylat- und/oder methacrylatgruppenhaltige fluorierte Carbonsäureester von Phosphono- oder Phosphinocarbonsäuren gemäß Anspruch 1, dadurch gekennzeichnet, daß R_{F} ein linearer oder verzweigter Fluoralkylrest mit 3 bis 10 Kohlenstoffatomen ist.

3. Verbindungen gemäß Anspruch 1, dadurch gekennzeichnet, daß R_{H} für einen Alkylrest mit einem oder zwei Kohlenstoffatomen steht.

4. Verbindungen gemäß Anspruch 1, dadurch gekennzeichnet, daß n eins oder zwei ist.

5. Verbindungen gemäß Anspruch 1, dadurch gekennzeichnet, daß o eins oder zwei ist.

6. Verbindungen gemäß Anspruch 1, dadurch gekennzeichnet, daß m gleich eins ist.

7. Verfahren zur Herstellung der acrylat- und/oder methacrylatgruppenhaltigen fluorierten Carbonsäureester von Phosphono- oder Phosphinocarbonsäuren gemäß den Ansprüchen 1 bis 6, dadurch gekennzeichnet, daß in einer mehrstufigen Synthese die entsprechenden Phosphono- oder Phosphinocarbonsäuren der Formel (II) oder deren Salze 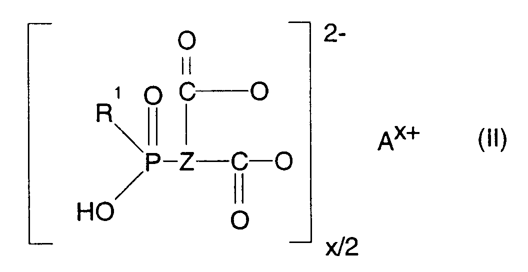 wobei A ein Wasserstoffkation, ein Ammoniumkation oder ein ein- oder mehrwertiges Metallkation und x eine ganze Zahl, die der Ladung des Kations A entspricht, sind und R¹ und Z dieselbe Bedeutung wie oben haben,
im ersten Schritt mit den entsprechenden fluorgruppenhaltigen Alkoholen der Formel (III) 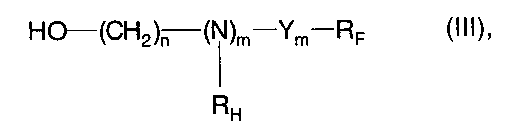 wobei n, m, R_{H}, Y und R_{F} dieselbe Bedeutung wie oben haben,
und in einem weiteren Schritt mit den entsprechenden hydroxyfunktionellen Acryl- bzw. Methacrylsäurederivaten der Formel (IV)
HO(CH₂)ₒ-R (IV),
wobei R und o dieselbe Bedeutung wie oben haben,
verestert werden.

8. Verwendung der erfindungsgemäßen acrylat- und methacrylatgruppenhaltigen fluorierten Carbonsäureester von Phosphono- oder Phosphinocarbonsäuren als Hydrophobier- und/oder Oleophobiermittel.

## Claims

1. Fluorinated carboxylic acid esters of phosphono- or phosphinocarboxylic acids containing acrylate and/or methacrylate groups and having the general formula (I) 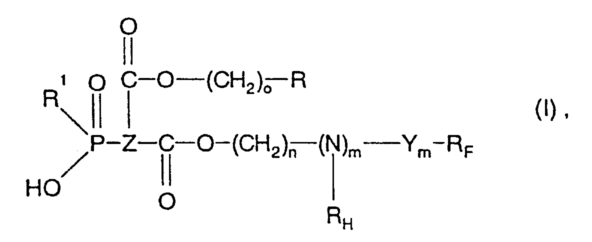 wherein:
R¹ is a hydroxyl group, a methyl group, an ethyl group or a phenyl radical,
R_{F} is a linear or branched fluoroalkyl radical containing 1 to 18 carbon atoms, or a fluorinated, branched or linear, mono- or polyether containing 1 to 18 carbon atoms,
R_{H} is a linear or branched alkyl radical containing 1 to 10 carbon atoms,
R is an acrylate group of structure 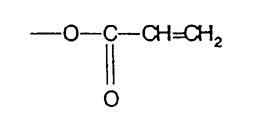 or a methacrylate group of structure 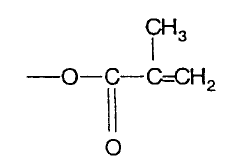
Y represents a 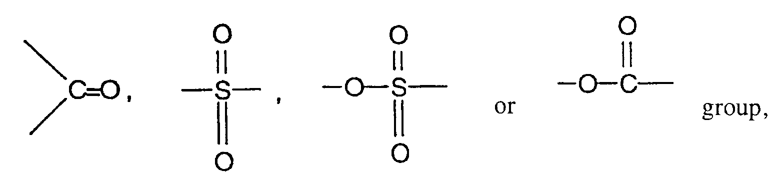
Z represents a linear or branched alkanetriyl radical containing 1 to 20 carbon atoms, or
a linear or branched alkanetriyl radical containing 1 to 20 carbon atoms, interrupted by amino groups which may themselves be substituted by C₁ to C₁₀ alkyl groups or aryl groups, or
a linear or branched alkanetriyl radical which contains 1 to 20 carbon atoms and which is substituted by one or more groups of structure -COR², or
a linear or branched alkanetriyl radical which contains 1 to 20 carbon atoms and which is substituted by one or more groups of structure -PO₂HR¹, wherein R¹ has the same meaning as above,
m may be 0 or 1,
n represents an integer from 0 to 6,
o represents an integer from 0 to 6, and
R² represents a hydroxyl radical, or a radical of structure 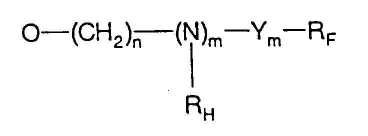 or a radical of structure O-(CH₂)ₒR, or
a linear or branched alkoxy radical containing 1 to 30 carbon atoms, where n, m, o, R_{H}, R_{F}, R and Y have the same meaning as above,
and salts thereof.

2. Fluorinated carboxylic acid esters, which contain acrylate and/or methacrylate groups, of phosphono- or phosphinocarboxylic acids according to claim 1, characterised in that R_{F} is a linear or branched fluoroalkyl radical containing 3 to 10 carbon atoms.

3. Compounds according to claim 1, characterised in that R_{H} represents an alkyl radical containing one or two carbon atoms.

4. Compounds according to claim 1, characterised in that n is one or two.

5. Compounds according to claim 1, characterised in that o is one or two.

6. Compounds according to claim 1, characterised in that m is equal to one.

7. A method of preparing the fluorinated carboxylic acid esters, which contain acrylate and/or methacrylate groups, of phosphono- or phosphinocarboxylic acids according to claims 1 to 6, characterised in that in a multi-stage synthesis the corresponding phosphono- or phosphinocarboxylic acids of formula (II) 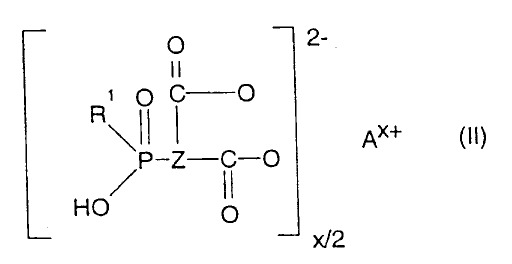 or salts thereof,
wherein A is a hydrogen cation, an ammonium cation or a monovalent or polyvalent metal cation, x is an integer which corresponds to the charge of the cation A, and R¹ and Z have the same meaning as above,
are esterified in the first step with the corresponding alcohols, which contain fluoro groups, of formula (III) 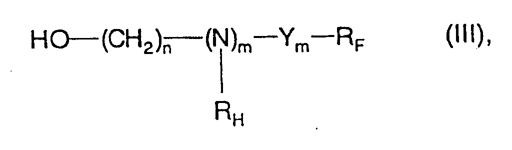 wherein n, m, R_{H}, Y and R_{F} have the same meaning as above,
and are esterified in a further step with the corresponding hydroxy-functional acrylic or methacrylic acid derivatives of formula (IV)
(CH₂)ₒ-R (IV),
wherein R and o have the same meaning as above.

8. The use of the fluorinated carboxylic acid esters, which contain acrylate and methacrylate groups, of phosphono- or phosphinocarboxylic acids according to the invention as waterproofing and/or oil-repellency agents.

## Revendications

1. Esters d'acides carboxyliques fluorés contenant des groupes acrylates et/ou méthacrylate d'acides phosphono- ou phosphino-carboxyliques de formule générale (I) 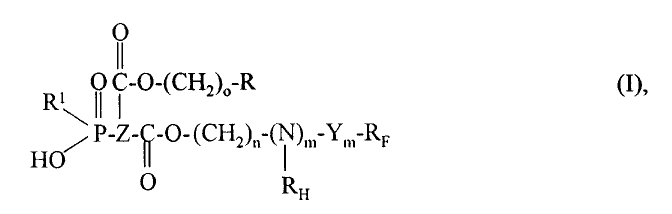 où
R¹ est un groupe hydroxyle, un groupe méthyle, un groupe éthyle ou un reste phényle,
R_{F} est un reste fluoroalkyle linéaire ou ramifié de 1 à 18 atomes de carbone ou un mono- ou polyéther ramifié ou linéaire fluoré de 1 à 18 atomes de carbone,
R_{H} est un reste alkyle linéaire ou ramifié avec 1 à 10 atomes de carbone,
R est un groupe acrylate de structure 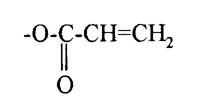 ou un groupe méthacrylate de structure 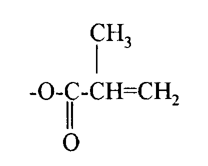
Y est un groupe 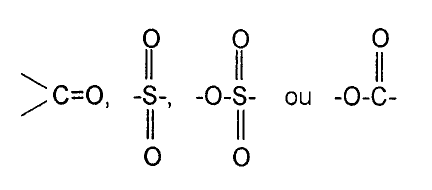
Z est un reste alcanetriyle linéaire ou ramifié avec 1 à 20 atomes de carbone ou
est un reste alcanetriyle avec 1 à 20 atomes de carbone linéaire ou ramifié interrompu par des groupes amino, qui à leur tour peuvent être substitués par des groupes alkyles C₁ à C₁₀ ou des groupes aryles, ou
est un reste alcanetriyle de 1 à 20 atomes de carbone linéaire ou ramifié substitue par un ou plusieurs groupes de structure -COR², ou
est un reste alcanetriyle de 1 à 20 atomes de carbone linéaire ou ramifié substitué par un ou plusieurs groupes de structure -PO₂HR¹, où R¹ a la même signification que celle donnée ci-dessus,
m est 0 ou 1
n est un nombre entier de 0 à 6,
o est un nombre entier de 0 à 6 et
R² est un reste hydroxyle ou un reste de structure 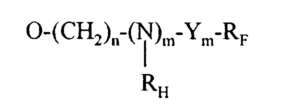 ou un reste de structure O-(CH₂)ₒ-R ou
est un reste alcoxy linéaire ou ramifié de 1 à 30 atomes de carbone, où n, m, o, R_{H}, R_{F}, R et Y ont la signification donnée ci-dessus,
et leurs sels.

2. Esters d'acides carboxyliques fluorés contenant des groupes acrylates et/ou méthacrylates d'acides phosphono- ou phosphino-carboxyliques selon la revendication 1, caractérisés en ce que R_{F} est un reste fluoroalkyle linéaire ou ramifié de 3 à 10 atomes de carbone.

3. Composés selon la revendication 1, caractérisés en ce que R_{H} est un reste alkyle avec 1 ou 2 atomes de carbone.

4. Composés selon la revendication 1, caractérisés en ce que n est 1 ou 2.

5. Composés selon la revendication 1, caractérisés en ce que o est 1 ou 2.

6. Composés selon la revendication 1, caractérisés en ce que m est égal à 1.

7. Procédé de préparation d'esters d'acides carboxyliques fluorés contenant des groupes acrylates et/ou méthacrylates d'acides phosphono- ou phosphino-carboxyliques selon les revendications 1 à 6, caractérisé en ce que, dans une synthèse en plusieurs étapes, on estérifie les acides phosphono- ou phosphinocarboxyliques correspondants de formule (II) ou leurs sels 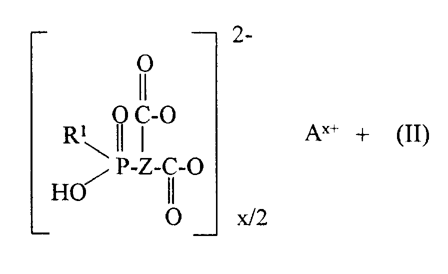 où A est un cation hydrogène, un cation ammonium ou un cation de métal mono- ou polyvalent et x est un nombre entier, qui correspond à la charge du cation A, et R¹ et Z ont la signification déjà donnée ci-dessus,
dans une première étape avec les alcools contenant des groupes fluor correspondant à la formule (III) 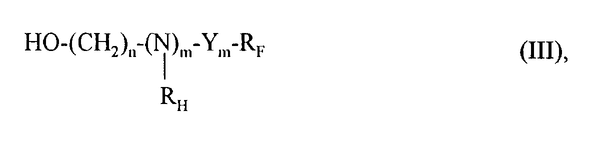 où n, m, R_{H}, Y et R_{F} ont la même signification que celle donnée ci-dessus,
et dans une autre étape, on fait réagir avec les dérivés d'acides acryliques ou méthacryliques à fonction hydroxy correspondants de formule (IV)
HO(CH₂)ₒ-R (IV),
où R et o ont la signification donnée ci-dessus.

8. Utilisation des esters d'acides carboxyliques fluorés contenant des groupes acrylates et méthacrylates d'acides phosphono- ou phosphino-carboxyliques comme agents hydrofuges et/ou oléofuges.
